Europäisches Patentamt

European Patent Office

Office européen des brevets

(11) Publication number: **0 222 762**
**B1**

# EUROPEAN PATENT SPECIFICATION

(45) Date of publication of patent specification: 25.07.90

(51) Int. Cl.⁵: **B 65 G 1/06**

(21) Application number: 85904028.9

(22) Date of filing: 25.07.85

(86) International application number:
PCT/US85/01402

(87) International publication number:
WO 86/06050 23.10.86 Gazette 86/23

(54) ROBOTIC MATERIALS HANDLING SYSTEM.

(30) Priority: 08.04.85 US 720577

(43) Date of publication of application:
27.05.87 Bulletin 87/22

(45) Publication of the grant of the patent:
25.07.90 Bulletin 90/30

(84) Designated Contracting States:
DE FR GB SE

(56) References cited:
CA-A- 504 400    US-A-4 271 440
DE-A-2 519 870    US-A-4 275 425
JP-A-5 375 674    US-A-4 300 040
JP-A-5 612 204    US-A-4 366 423
US-A-2 212 711    US-A-4 383 789
US-A-3 061 111    US-A-4 415 975
US-A-3 302 804    US-A-4 458 802
US-A-3 517 774    US-A-4 519 522
US-A-3 517 775    US-A-4 527 934
US-A-3 938 190    US-A-4 654 727
US-A-3 951 271

(73) Proprietor: ODETICS, INC.
1515 South Manchester Avenue
Anaheim California 92802 (US)

(72) Inventor: CRABTREE, Timothy, L.
2264 Crestwood Lane
Anaheim, CA 92804 (US)
Inventor: FAIRCHILD, Robert, Graham
1311 W. Santa Clara
Santa Ana, CA 92706 (US)
Inventor: LINDQUIST, Charles
1001 Concourse
La Habra, CA 90631 (US)

(74) Representative: Massey, Alexander et al
MARKS & CLERK Suite 301 Sunlight House Quay
Street
Manchester, M3 3JY (GB)

Courier Press, Leamington Spa, England.

**Description**

The present invention relates to robotic materials handling system for storing and handling box-like articles. More particularly, the present invention relates to a robotic system for rapidly and reliably handling videocassettes in an automated cassette sequencing system. In such a system, plural tape transports are provided and the handling system automatically loads videocassettes into the transports for sequential playing of programs contained in the cassettes. Such systems are in common use in television broadcasting in which a number of programs, or "spots", are played during a typical commercial interruption.

US—A—3938190, which corresponds to the preamble of claim 1, discloses a robotic handling system for storing and handling, *inter alia*, videotape cartridges, which system comprises a cylindrical storage area defined by columns of stored videotape cartridges and a play and processing station, i.e. a cartridge loading station. The system also includes a cartridge handling assembly disposed centrally of the cylindrical storage area and comprising a rotatable vertical shaft along which a manipulator assembly can be moved to a predetermined vertical position for cartridge selection or insertion. The manipulator assembly is rotatable about the vertical shaft and comprises a single radially-extendable push-and-pull cartridge retraction/insertion mechanism.

A central controller controls rotational movements of the shaft and the manipulator assembly and the push and pull movements retraction/insertion mechanism.

It is an object of the present invention to provide a robotic materials handling system of the same general character as is disclosed in US—A—3938190 which is more efficient, is substantially faster and is more accurate than that disclosed in US—A—3938190.

According to the present invention there is provided a robotic materials handling apparatus for storing and handling box-like articles comprising a storage area including a plurality of columns of storage bins and the loading location being arranged about a circular space, each storage bin and the loading location having an opening facing the circular space, a vertical support shaft located at the center of the circular space, a manipulator assembly, slidably movable along the shaft, for moving articles between the storage bins and the loading location and including a radially extendable article-handling assembly, and means for controlling movements of the article-handling assembly between a selected storage bin and the loading location, the apparatus being characterised in that the manipulator assembly comprises a plurality of radially extendable article-handling assemblies positioned symmetrically about said support shaft, said support shaft being stationary, each article-handling assembly being in the form of a gripper assembly having a pair of fingers for grasping opposite sides of box-like articles and pushing them into and pulling them out of the storage bins, the manipulator assembly further including means for rotating the gripper assemblies about the stationary shaft to position them adjacent desired columns of storage bins, and control means for controlling the sliding movement of the manipulator assembly along the stationary support shaft, the rotation of the gripper assemblies about the stationary support shaft, and the grasping action of the gripper assemblies.

As a result of the present invention there is provided a symmetric robotic materials handling system with a symmetric arrangement of gripper arm assemblies disposed centrally of a symmetric arrangement of article pick-up and delivery locations which allows for very rapid access to any specific pick-up or delivery location and rapid handling of the stored articles.

Brief description of the drawings

The invention will be described with reference to the accompanying drawings, wherein:

Figure 1 is a perspective view of a cartridge handling and sequencing system incorporating the handling system of the present invention;

Figure 2 is a top plan diagrammatic view of the handling system of the present invention;

Figure 3 is a sectional view along lines 3—3 of Figure 2 showing the arrangement of the storage library of the present invention;

Figure 4 is a block diagram of the videocassette sequencing and handling system which with the present invention is employed;

Figure 5 is a perspective view of the manipulator assembly of the present invention;

Figure 6 is a top plan view taken along lines 6—6 of Figure 5;

Figure 7 is a sectional view of the manipulator assembly taken along line 7—7 of Figure 6;

Figure 8 is a sectional view of the manipulator assembly taken along lines 8—8 of Figure 7;

Figure 9 is a sectional view of the manipulator assembly taken along lines 9—9 of Figure 6;

Figure 10 is a sectional view of the manipulator assembly taken along lines 10—10 of Figure 7;

Figure 11 is a perspective view of the slide and gripper mechanism of the present invention;

Figure 12 is a sectional view of the slide and gripper mechanism;

Figure 13 is a top view of the gripper mechanism taken along lines 13—13 of Figure 12; and

Figure 14 is a block diagram of the control system of the manipulator assembly of the present invention.

Description of the preferred embodiment

The following description is of the best presently contemplated mode of carrying out the invention. This description is made for the purpose of illustrating the general principles of the invention, and is not to be taken in a limiting sense. In particular, although the invention is described with reference to a videocassette handling system, the invention may be utilized in other applications where box-like articles are to be stored and handled. The scope of the invention is best determined by reference to the appended claims.

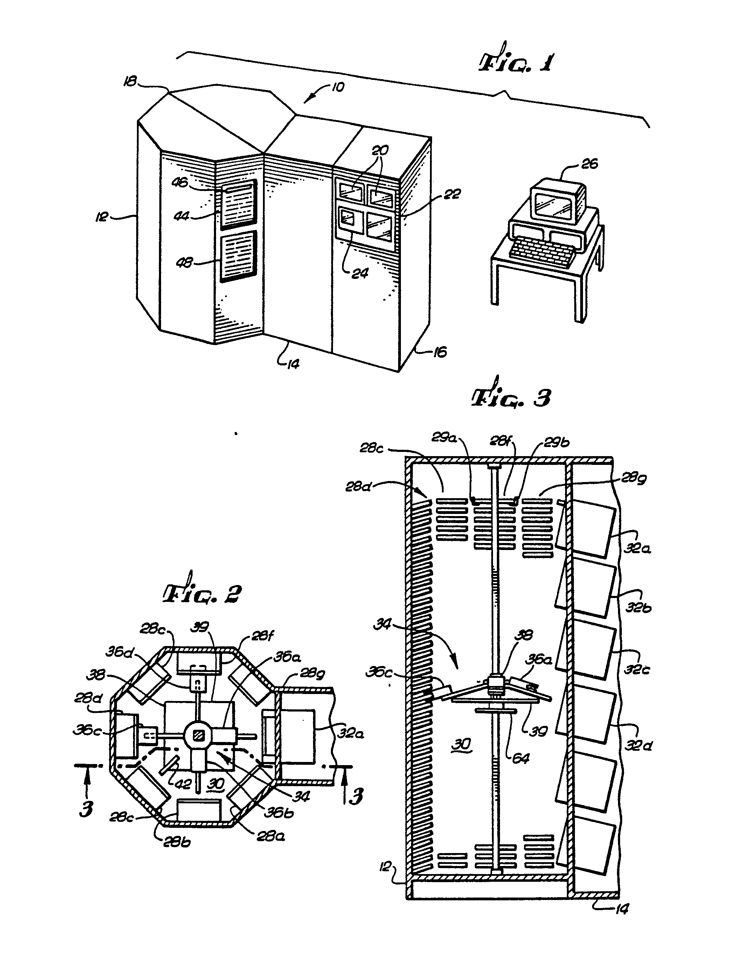

Referring to Figure 1, a videocassette sequencing system is comprised of a main housing 10 including an octagonal library portion 12, a videotape transport and electronics section 14 and a monitoring section 16. The library section is hinged at 18 so as to allow access to its interior for servicing. The library section is configured to store approximately three hundred videocassettes. The electronics section 14 includes a plurality of videocassette transports and associated electronics. The monitoring section 16 includes a pair of stereo speakers 20 for audio monitoring, a video monitor 22 and a waveform monitor/vector scope 24. The operation of the system is controlled by means of a computer 26 which in the present embodiment is a personal computer including a control keyboard and a monitor.

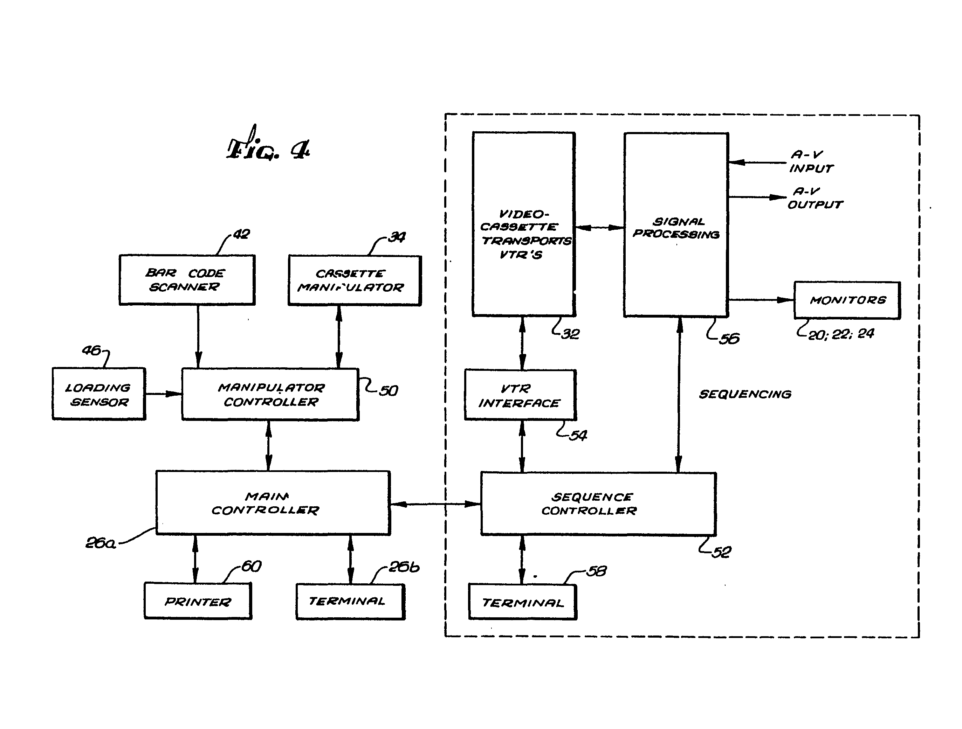

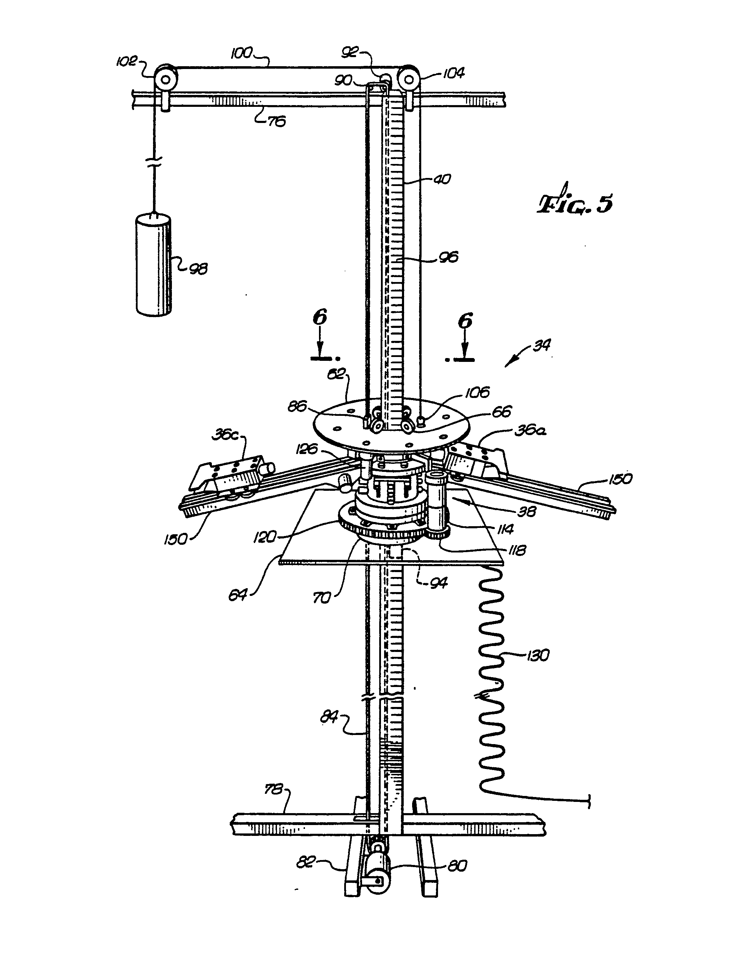

Referring to Figures 2 and 3, the configuration of the library section 12 will be described. The library includes seven columns 28a—g of cassette storage bins, with each bin being slightly inclined so as to aid in the retention of videocassettes. Each bin is formed of side L-shaped sections 29a and 29b as illustrated in Figure 3, thus leaving the top and bottom of a videocassette stored in a bin exposed. In the present embodiment of the invention, each column includes forty-three individual storage bins, with the library 12 thus containing a total of three hundred and one storage bins. The columns 28a—g are arranged in a circular fashion, with one column being located on each of seven sides of the octagonal housing. The columns thus surround a central space 30.

A column of four videocassette transports 32a—d is located on the eighth side of the library housing. The transports 32 are substantially the same distance from the axial center of the space 30 as are the storage bins 28. The transports 32 and associated electronics may be playback only, or may be record/playback to facilitate dubbing of videocassettes.

The manipulator assembly of the present invention is contained within the central space 30 and is identified generally at 34. The manipulator includes four cassette gripper mechanisms 36a—d carried on a hub assembly 38 and circuit board 39, both of which are rotatable and vertically movable with respect to a central vertical shaft 40 coincident with the longitudinal axis of the central space 30. The gripper mechanisms are spaced at angles which are integral multiples of the angular spacing of the columns of storage bins, so that the gripper mechanisms may operate simultaneously. A bar code reader 42 is also attached to the circuit board assembly 39.

The cassette manipulator assembly 34 transports cassettes between various storage bins and between storage bins and the cassette transport units under control of the computer 26. Cassettes to be entered into the library 12 are inserted via an access port 44 (Figure 1) which exposes a portion of the column of storage bins 28a. Each of the exposed bins includes an associated cassette sensor for detecting when a cassette is inserted into it, with a sensor 46 for one of the bins being indicated in Figure 1. The sensor may be a mechanical sensor, optical sensor or other type of sensor which can function to provide a detection signal when a cassette is inserted into a storage bin. Since the bins at the access opening are exposed at their lower side, they are provided with springs for retaining videocassettes inserted into them.

Cassettes to be removed from the system are provided by the manipulator 34 to a second access opening 48 (Figure 1) located below the opening 44. In normal operation, all cassettes contained in the library will be entered through the access opening 44 and subsequently removed through the access opening 48. With this configuration, the operation of the system is greatly simplified, since there is no requirement of physical access to all the storage bins of the library during normal operation.

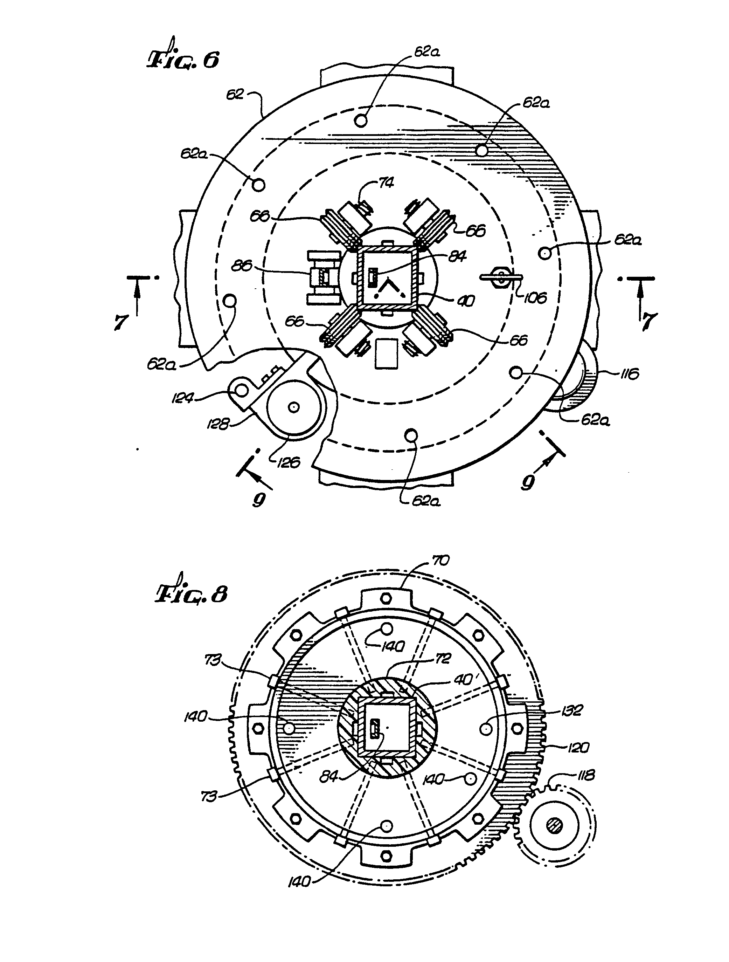

Figure 4 is a block diagram of the videocassette handling and sequencing system. The system operates to access a series of cassettes from the library, load them into the transports 32 and play them consecutively in the desired order. The cassettes are then returned by the manipulator 34 to storage bins which may be in the main library for storage or adjacent the access opening 48 for cassettes that are to be removed from the library. The system is described in detail in US—A—4 654 727.

The computer 26 includes a main controller 26a and terminal 26b and associated printer 60. The main controller provides commands to a manipulator controller 50 and a sequence controller 52. The sequence controller 52 controls the operation of the transport units 32 (via interface circuitry 54) and signal processing circuitry 56. The sequencing aspect of the videocassette system does not form a part of the present invention and will not be described in detail.

The manipulator controller 50 is a microprocessor-based controller which provides commands to the manipulator 34 and decodes information from the bar code scanner 42 and sensors 46. The bar code scanner 42 is used to read a bar code contained on a label of each videocassette entered into the system. The main controller 26a is programmed to include data regarding every cassette in general use in the system, e.g., all of the cassettes in general use in a television station. As a cassette is entered into the library 12 via the access opening 44, a loading sensor 46 associated with the storage bin into which the cassette is located provides a detection signal to the manipulator controller 50. The controller 50 automatically actuates the cassette manipulator 34 to move the cassette from the loading bin to a storage bin within the library 12. Prior to the grasping of the cassette by the manipulator, the bar code on the cassette is read by means of the bar code scanner 42. The scanned code is decoded by the manipulator controller 50 and provided to the main controller 26a. The controller 26a in turn instructs the manipulator controller 50 to cause the cassette manipulator to deposit the cassette in a selected storage bin. The main controller 26a maintains a cross reference of each cassette (based upon the scanned bar code) with a storage location within the library 12.

In operation, the main controller 26a may be programmed by providing it with a time sequential list (log) of cassettes to be played. The controller 26a contains data regarding the location of every cassette in the library 12. In executing the play list, the main controller 26a will send commands both to the manipulator controller 50 and the sequence controller 52 based upon the play list and the time of day. For example, in preparation for a station break the main controller 26a will command the manipulator controller 50 to load the first four cassettes into the transport units 32 and command the sequence controller to play the cassettes in a desired order. The sequence controller 52 is then readied to accept an external cue to begin a break.

As the break progresses, the main controller 26a continuously monitors the status of the sequence controller 52. When additional cassettes are required the appropriate commands are sent to the manipulator controller 50 and when additional sequences are required the appropriate commands are sent to the sequence controller 52. In this fashion, the main controller 26a maintains the current state of the machine by ensuring that the transport units 32 are loaded with the required cassettes and the sequence controller 52 is programmed with the next required sequence.

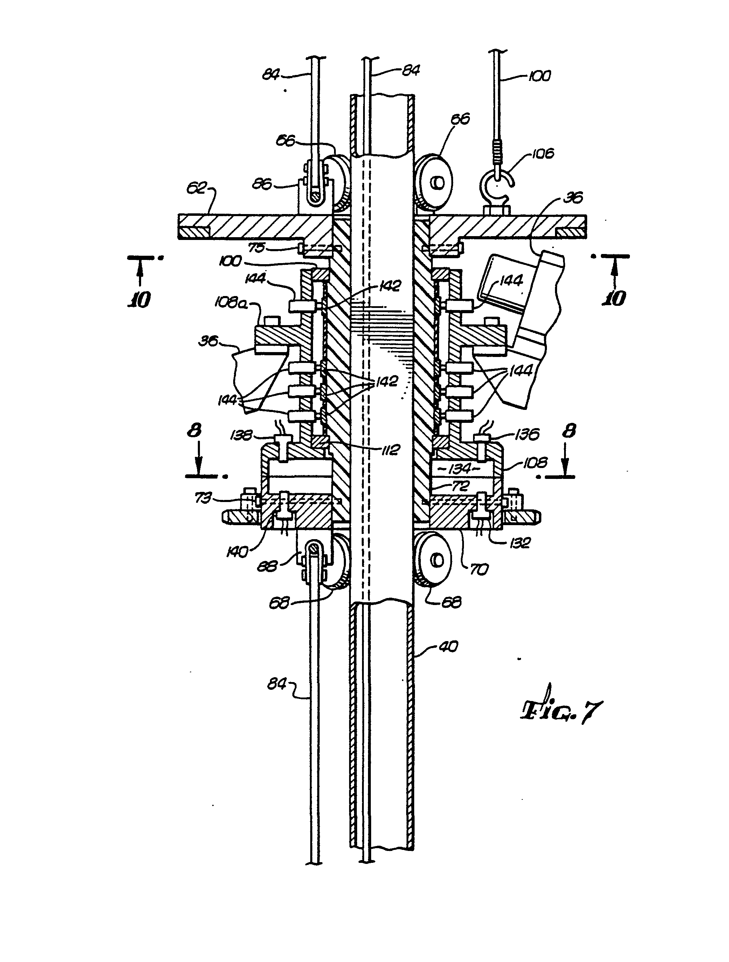

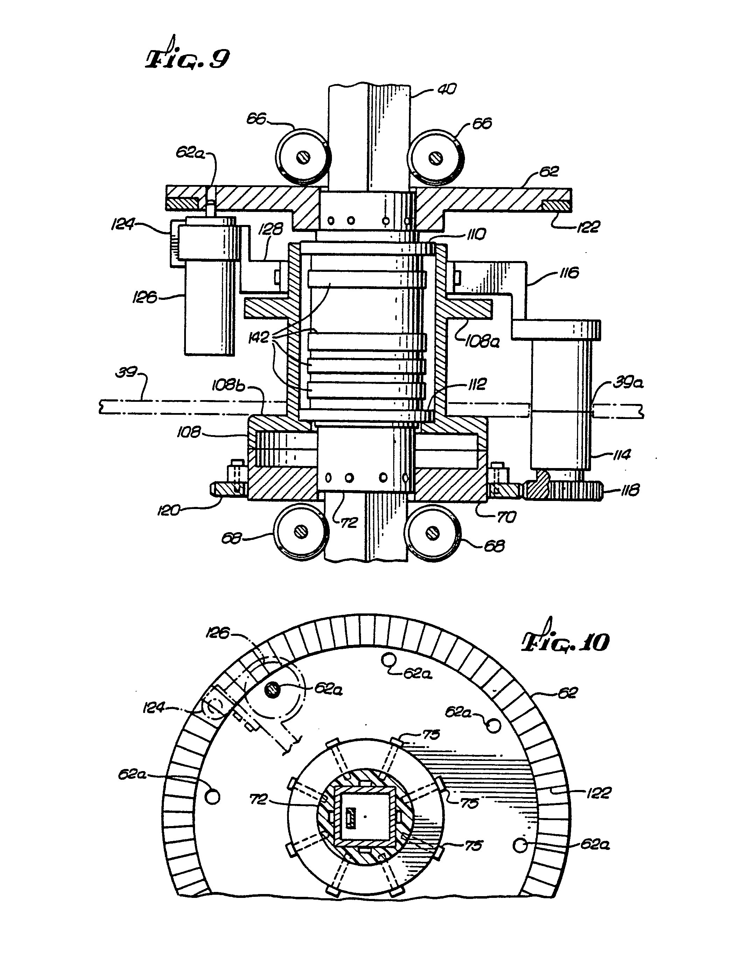

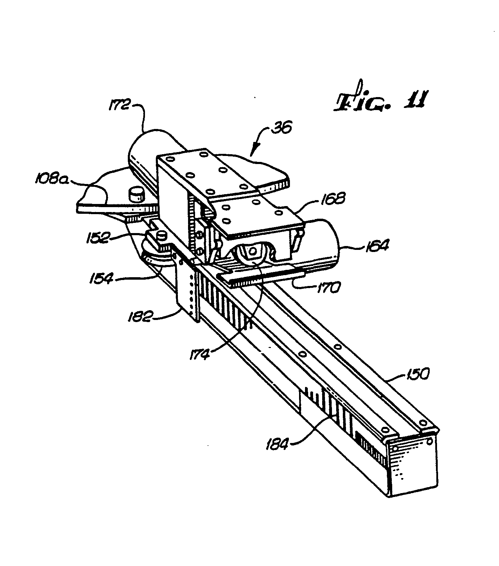

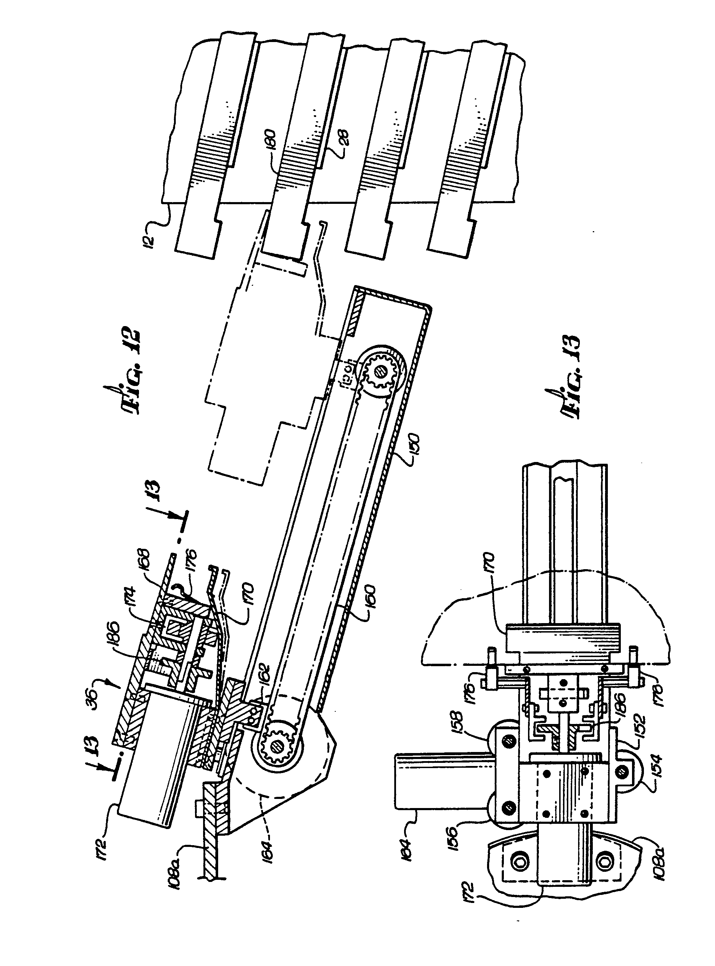

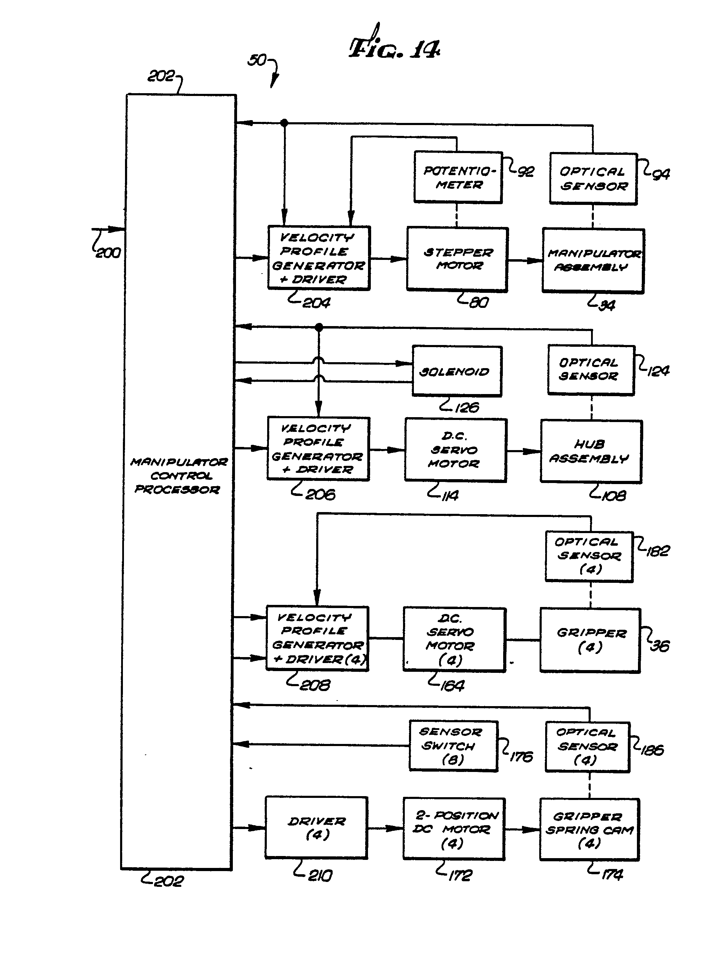

The cassette manipulator 34 is illustrated in detail in Figures 5—13. For purposes of clarity, the gripper 36b, circuit board assembly 39 and bar code reader 42 have been omitted from Figure 5. The manipulator assembly 34 includes a rotatable hub assembly 38 to which the gripper assemblies are coupled and a stationary bearing assembly including a top circular plate 62, lower circuit board 64 (also shown in Figure 1) and a sprocket assembly 120. The bearing assembly is supported for vertical movement along the square shaft 40 by means of four V-groove rollers 66 secured to the plate 62 as illustrated in Figures 6, 7 and 9 and four V-groove rollers 68 secured to a lower bearing plate 70 as shown in Figures 7 and 9. A central tubular slip ring collar 72 forms the remainder of the bearing portion and is interconnected to the elements 70 and 62 by means of pins 73 and 75 (Figures 8 and 10). The inner diameter of the collar 72 is greater than the diagonal extent of the shaft 40, and the rollers 66 and 68 are the only portion of the manipulator assembly which contact the shaft 40. It should be noted that the V-groove rollers 66 and 68 are spring-loaded as illustrated at 74 in Figure 6 to bias them toward the shaft 40, thereby rendering the bearing assembly self-aligning.

The shaft 40 is coupled at its top and bottom to frame members 76 and 78 (Figure 5) which form a part of the main frame of the library 12. The manipulator assembly 34 is driven along the shaft 40 by means of a stepper motor 80 attached to an additional frame section 82 just below the section 78. The stepper motor drives the manipulator assembly 34 by means of a belt 84 which is attached to the upper plate 62 and 86 and to the lower bearing element 70 at 88 (Figure 7). The belt 84 is looped through the hollow shaft 40 so as to avoid the necessity of passing through the manipulator assembly. A pair of pulleys 90 at the top of the shaft 40 support the belt 84. In order to monitor the position of the manipulator assembly along the shaft, a precision potentiometer 92 driven by one of the pulleys 90 is provided. This potentiometer provides a coarse indication of the position of the manipulator assembly 34. In addition, an optical sensor 94 (Figure 5) comprised of a photodiode array is secured to the bottom element 70 and provides fine position feedback by sensing position markings 96 along the shaft 40. The position feedback from the potentiometer 92 and sensor 94 are used to control the positioning of the manipulator 34 in a manner to be described.

A counterweight 98 is coupled to the manipulator assembly 34 by means of a cable 100 which is looped over pulleys 102 and 104 and attached to a ring 106 secured to the top plate 62. By including the counterweight 98, the motor 80 need only overcome the mass of the manipulator assembly and the counterweight, i.e., the force of gravity need not be overcome.

A cylindrical hub unit 108 (Figures 7 and 9) surrounds and is rotatable with respect to the slip ring collar 72. The hub is spaced from the collar 72 by means of upper and lower non-rotating rings 110 and 112 which are secured to the collar 72. A D.C. motor 114 is attached to the hub unit 108 by means of a bracket 116. The motor drives a gear 118 which engages a sprocket 120 secured to the lower bearing element 70. This structure is shown in Figures 8 and 9. When the motor 114 is driven, the gear 118 rotates to drive the motor and gear around the sprocket 120, thus resulting in rotation of the hub assembly 108. The gripper assemblies 36 are attached to the hub assembly at an extension 108a (Figure 7) and therefore rotate with the hub assembly.

The rotational position of the hub assembly is controlled by means of optical feedback and positive detent positioning. As illustrated in Figure 10, the top plate 62 includes radial positioning marks 122 formed around a periphery of its lower surface. These marks are sensed by an optical sensor 124, which is shown most clearly in Figure 6. As the hub assembly rotates, the marks are counted to provide position feedback. When the desired position has been reached, final positioning is achieved by means of a solenoid 126 (Figures 6 and 9), the beveled plunger of which extends into one of a plurality of holes 62a formed in the top plate 62. Both the optical sensor 124 and solenoid 126 are secured to the hub element 108 by means of a bracket 128. The holes 62a are located to precisely position a gripper assembly in front of a column of storage bins or the column of transport units. The detent mechanism employed enables a rotational accuracy of better than one degree to be achieved. This positional accuracy helps to prevent any jamming of the mechanism.

As shown in Figure 9, the main circuit board 39 (illustrated in phantom) is carried on a surface 108b of the hub unit 108. The motor 114 passes through an opening 39a in the circuit board and serves to rotationally fix the position of the circuit board. The circuit board contains a major portion of the manipulator electronics, including microprocessor circuitry. Since components on the circuit board 39 must communicate with additional portions of the system away from the manipulator assembly 34, some form of data link is required. Since the circuit board 39 rotates with the hub assembly, a cable connection cannot be employed since it would wrap around the shaft 40. The present invention employs a unique infrared communications chamber for transmitting data to the manipulator assembly 34.

Data signals from the portion of the system remote from the manipulator (e.g., the main controller 26a and a portion of the manipulator controller 50) are provided to the lower circuit board 64 by means of a cable 130 (Figure 5) which is coiled to accommodate the vertical motion of the manipulator assembly. The electrical data signals are converted to infrared signals by an infrared transmitter 132 (Figure 7) and transmitted into a chamber 134 defined by channels in the facing portions of the bottom bearing element 70 and the hub element 108. These elements are formed of machined aluminum and the surface of the chamber 134 is thus relatively reflective. Signals transmitted by the transmitter 132 will reflect within the chamber and will ultimately be received by an infrared receiver 136 located in the hub unit 108. Thus, data signals can be transferred from the stationary bearing section 70 to the rotating hub section 108. Similarly, signals can be transferred from the hub section to the bearing section by means of a transmitter 138 and receiver 140. As shown in Figure 8, a plurality of transmitters 140 are employed to ensure that the transmitted signals are properly received. Similarly, a plurality of transmitters 136 may be provided in the hub section 108. In order to permit simultaneous bidirectional data communications, signals transmitted from the bearing section 70 to the hub section 108 may be transmitted at a first frequency and signals transmitted from the hub section 108 to the bearing section 70 may be transmitted at a second frequency. After reception by the receivers at either side, the infrared signals are converted to electrical signals and transmitted to the appropriate components.

In addition to the transmission of data signals, power signals must be provided to the manipulator assembly to power the motors and other electronic components contained on the manipulator assembly. This is accomplished by means of a slip ring structure illustrated in Figures 7 and 9. The power signals are also delivered to the lower circuit board by means of the coiled cord 130. These signals are then coupled to metal slip rings 142 which surround the bearing element 172. The slip rings are contacted by brushes 144 carried by the hub unit 108. Power signals are then transferred from the brushes 144 to appropriate components on the manipulator assembly.

Details of the gripper assemblies 36 are shown in Figures 11—13. Each gripper assembly 36 is supported on a rail assembly 150. The gripper 35 includes a bottom platform 152 to which are secured three V-groove rollers 154, 156 and 158. These rollers contact protruding edges of the rail assembly 150 and enable the gripper mechanism 36 to slide along the rail. The rollers 156 and 158 are spring-based toward the rail assembly similar to the rollers on the main bearing assembly, so that the gripper is self-aligning with respect to the rail assembly.

The gripper is driven along the rails by means of a timing belt 160 contained within the rail assembly 150. The gripper assembly is coupled to the belt by means of a bracket 162, and the belt is driven by a DC motor 164. The gripper per se is formed by a top plate 168 and a flat berilium copper spring 170. A two-position DC motor 172 drives the spring 170 from an open to a closed position by means of an eccentrically mounted circular cam 174. A pair of switches 176 are employed to detect when a cassette has been seated in the gripper assembly.

As can be seen in Figure 12, when it is desired to grasp a cassette 180 contained in a storage bin 28, the motor 172 is activated to open the gripper and the motor 164 is then driven to move the gripper forward to the end of the rail assembly 150. Upon detection of proper seating of the cassette 180 by means of the switches 176, the motor 172 is activated to close the gripper to grasp the cassette. The motor 164 is then driven to retract the gripper 36 and remove the cassette 180 from the bin 28. The manipulator assembly may then be moved vertically and/or rotationally to transfer the cassette to the desired location. In order to monitor the positions of the gripper along the slide, an optical sensor 182 is provided to read marks 184 located along the slide. In addition, an optical sensor assembly 186 may be provided to monitor the position of the motor 172.

The manner of control of the manipulator assembly will be described with reference to Figure 14 of the drawings.

When a cassette is to be transported, the main controller 26a provides an instruction on line 200 to a manipulator control processor 202 instructing it to fetch a cassette from a particular location (e.g., storage bin or tape transport) and deliver it to a destination location. The control processor 202 has knowledge of the current position of the manipulator by means of the optical sensor 94 (for vertical position) and 124 (for rotational position). The control processor sends commands to a velocity profile generator and driver 204 to drive the stepper motor 80 to control the vertical positioning of the manipulator assembly 34. Coarse feedback is provided by the potentiometer 92 and fine feedback is provided by the sensor 94 to the velocity profile generator. The velocity profile generator is a microprocessor-based system that generates a velocity signal as a function of the position of the manipulator assembly to cause the assembly to reach the desired location in the shortest amount of time. Similarly, a velocity profile generator and driver 206 drives the DC servo motor 114 to rotate the hub assembly to the desired orientation. When the final destination is reached, the solenoid 126 will be seated in an opening 62a in the top plate 62.

The position of the manipulator assembly is monitored by the control processor 202 to determine when its desired vertical and rotational positions have been reached, as indicated by the optical sensor 94 and solenoid 126. When this occurs, the control processor 202 instructs one or more velocity profile generators and drivers 208 to drive an associated servo motor 164 and gripper 36 forward along the slide assembly 150. Once the cassette has been contacted properly as indicated by the sensor switches 176, the control processor 202 activates a driver 210 to drive the gripper motor 172 and rotate the gripper spring cam 174. The gripper is then retracted by means of the motor 164 and the manipulator assembly is rotated and moved vertically to the destination location. The gripper is then again moved forward and the spring cam rotated so as to release the videocassette.

The velocity profile generators 204, 206 and 208 are all microprocessor-based systems which generate an optimum velocity profile for a particular distance to be traveled in order to achieve the most rapid and accurate motion. In the case of the velocity profile generators 208, different conditions will be encountered in operation depending upon whether a cassette is in the gripper and whether the cassette is to be removed or delivered from a storage bin or tape transport. In order to achieve optimum performance, both in terms of speed and reliability, a different velocity profile is generated depending on the operation to be carried out. In the present embodiment of the invention, the control processor 202 selects from among eight different velocity profiles contained in the velocity profile generators 208 to correspond to eight different operational conditions. In addition, each velocity profile generator 208 can be independently controlled, i.e., they may simultaneously generate different velocity profiles. Thus, the optimum profile may be selected for each gripper even if more than one gripper is being operated at a time.

In summary, the present invention provides a unique article storage and handling system including a storage library and a manipulator assembly. The manipulator assembly is extremely reliable and fast. The use of multiple gripper assemblies substantially increases the speed of transfer operations. In addition, it provides built-in redundancy, thereby increasing the reliability of the system. The unique control of the gripper assemblies further increases the operational capabilities of the system.

**Claims**

1. A robotic materials handling apparatus for storing and handling box-like articles comprising a storage area including a plurality of columns (28a—g) of storage bins (29a, 29b) and a loading location (32a—d) arranged about a circular space (30), each storage bin (29a, 29b) and the loading location (32a—d) having an opening facing the circular space (30), a vertical support shaft (40) located at the center of the circular space (30), a manipulator assembly (34), slidably movable along the shaft (40), for moving articles between the storage bins (29a, 29b) and the loading location (32a—d) and including a radially extendable article-handling assembly (36), and means for controlling movements of the article-handling assembly (36) between a selected storage bin (29a, 29b) and the loading location (32a—d), the apparatus being characterised in that the manipulator assembly (34) comprises a plurality of radially extendable article-handling assemblies (36) positioned symmetrically about said support shaft (40), said support shelf being stationary, each article-handling assembly (34) being in the form of a gripper assembly having a pair of fingers (168, 170) for grasping opposite sides of box-like articles and pushing them into and pulling them out of the storage bins (29a, 29b), the manipulator assembly further including means (114) for rotating the gripper assemblies (36) about the stationary shaft (40) to position them adjacent desired columns (28a—g) of storage bins, (29a, 29b) and control means (26, 50, 52) for controlling the sliding movement of the manipulator assembly (34) along the stationary support shaft (40), the rotation of the gripper assemblies (36) about the stationary support shaft (40), and the grasping action of the gripper assemblies (36).

2. An apparatus as claimed in claim 1 characterised in that there is a column of loading locations (32a—d).

3. An apparatus as claimed in claim 1 or 2 characterised in that the manipulator assembly (34) includes a bearing assembly (62, 72) movable along the support shaft and a hub assembly (38) which is rotatable about the bearing assembly (62, 72), each gripper arm assembly (36) being attached to the hub assembly (38) to rotate therewith and and the means for rotating the manipulator assembly (34) including a motor (114) for driving the hub assembly (38) with respect to the bearing assembly (62, 72).

4. An apparatus as claimed in any one of claims 1 to 3 characterised in that each gripper arm assembly (36) includes a motor (164) for driving the gripper mechanism (168, 170) along a rail (150), electrically controlled actuator means (172, 174) being provided for actuating the gripper mechanism (168, 170).

5. An apparatus as claimed in claim 4 characterised in that means (39) is provided for providing control signals for the gripper mechanism motor (164) and the actuator means (172, 174) of each gripper arm assembly (36) to the bearing assembly (62, 72), coupling means being provided for coupling the control signals to the hub assembly (38).

6. An apparatus as claimed in claim 5 characterised in that the coupling means includes a first coupling element (70) on the bearing assembly (38), a second coupling element (108) on the hub assembly (38), the first and second coupling elements (70, 108) having facing surfaces with complementary circular channels therein to form a coupling cavity (134), light transmitter means (132) on the first coupling element (70) for converting electrical signals to light signals and transmitting them into the cavity, and light receiver means (136) on the second coupling element (108) for receiving light signals in the cavity and converting them into electrical signals for delivery to the gripper mechanism motor (164) and the actuator means (172, 174) of each gripper arm assembly (36).

7. An apparatus as claimed in claim 6, characterised in that the coupling means includes transmitter means (138) on the second coupling element (108) and light receiving means (140) on the first coupling element (70), thereby facilitating transmission of signals from the manipulator assembly.

8. An apparatus as claimed in claim 6 or 7 characterised in that the first and second coupling element (70, 108) have reflective surfaces whereby signals transmitted into the channel will reflect off of the surface of the channel until received by the light receiving means (136, 140).

9. An apparatus one of claims 6 to 8 characterised in that slip ring means (142) for coupling power signals from the bearing assembly (62, 72) to the hub assembly (38) is provided.

10. An apparatus as claimed in any one of claims 1 to 9, characterised in that the stationary shaft (40) has a square cross section and the bearing assembly (62, 72) includes a first group of four rollers (66), each roller having a V-groove and contacting a different corner of the shaft (40), and a second group of four rollers (68) spaced from the first group, each roller (68) having a V-groove and contacting a different corner of the shaft.

11. An apparatus as claimed in any one of claims 1 to 10 characterised in that the means for driving the manipulator assembly (34) along the shaft (40) comprises a belt (84) connected to the manipulator assembly (34) and extending along the length of the shaft (40) and a motor (80) for driving the belt (84).

12. An apparatus as claimed in claim 11 characterised in that the shaft (40) is hollow and the belt (84) is looped through the shaft (40).

13. An apparatus as claimed in claim 12 characterised in that closed loop drive means (90, 92) is provided for driving the motor (80) to position the manipulator assembly (34) at a desired vertical location on the shaft (40).

14. An apparatus as claimed in claim 13 characterised in that the closed loop drive means includes first feedback means (92) for providing a coarse indication of the position of the manipulator assembly (34).

15. An apparatus as claimed in claim 14 characterised in that the closed loop drive means (90, 92) comprises second feedback means for providing a fine indication of the position of the manipulator assembly (34), said second feedback means including position markings (96) on the shaft (40) and an optical sensor (94) on the manipulator assembly (34) for reading the position markings to provide feedback.

16. An apparatus as claimed in any one of claims 10 to 15 characterised in that the rollers (66, 68) include spring means (74) for biasing the rollers (66, 68) toward the shaft (40).

17. An apparatus as claimed in any one of claims 11 to 16 characterised in that a counterweight (98) is provided coupled to the manipulator assembly (34) to move in a direction opposite to that of the manipulator assembly (34).

18. An apparatus as claimed in any one of claims 1 to 17 characterised in that a first finger (168) of the gripper mechanism (168, 170) is stationary and a second finger (170) is a flat spring element, a motor driven cam (172, 174) being provided for moving the spring element (170) from an open to a closed position.

19. An apparatus as claimed in claim 18 characterised in that a two-position motor (172) is provided for driving the cam (174).

20. An apparatus as claimed in any one of claims 4 to 19 characterised in that each gripper mechanism (168, 170) includes a plurality of V-groove rollers (154, 156, 158) for coupling the gripper mechanism (168, 170) to the rail (150).

21. An apparatus as claimed in any one of claims 4 to 20 characterised in that closed loop means (170) is provided for controlling the motor (164).

22. An apparatus as claimed in claim 21 characterised in that it includes feedback means (182, 184) for sensing the position of the gripper mechanism (168, 170), the drive means including velocity profile generator means (208) for controlling the velocity of the motor (164) as a function of the position of the gripper mechanism (168, 170).

23. An apparatus as claimed in claim 22 characterised in that the velocity profile generator means (208) includes means for selecting from among different velocity profiles as a function of the operational status of the gripper mechanism (168, 170).

24. An apparatus as claimed in claim 22 or 23 characterised in that means (202) is provided for monitoring the rotational and vertical position of the manipulator assembly (34), wherein the control means (26, 50, 52) causes the gripper assemblies (168, 170) to operate only after the manipulator (34) has reached the desired position.

## Patentansprüche

1. Robotervorrichtung zur Handhabung von Material, für die Lagerung und Handhabung kastenartiger Gegenstände, umfassend einen Lagerbereich mit mehreren aus Aufbewahrungsbehältern (29a, 29b) bestehenden Säulen (28a—g) und einen um einen kreisförmigen Raum (30) angeordneten Ladeplatz (32a—d), wobei jeder Aufbewahrungsbehälter (29a, 29b) und der Ladeplatz (32a—d) eine dem kreisförmigen Raum (30) zugewandte Öffnung aufweisen, eine im Zentrum des kreisförmigen Raums (30) angeordnete senkrechte Stützwelle (40), einen entlang der Welle (40) gleitend bewgbaren Manipulatoraufbau (34) zum Bewegen von Gegenständen zwischen den Aufbewahrungsbehältern (29a, 29b) und dem Ladeplatz (32a—d), mit einem radial verlängerbaren Aufbau (36) zur Handhabung von Gegenständen, und eine Einrichtung zur Steuerung der Bewegungen des Aufbaus (36) zur Handhabung von Gegenständen zwischen einem bestimmten Aufbewahrungsbehälter (29a, 29b) und dem Ladeplatz (32a—d), wobei die Vorrichtung dadurch gekennzeichnet ist, daß der Manipulatoraufbau (34) mehrere radial verlängerbare, symmetrisch um die Stützwelle (40) angeordnete Aufbaueinheiten (36) zur Handhabung von Gegenständen umfasst, wobei die Stützwelle ortsfest ist und jeder Aufbau (34) zur Handhabung von Gegenständen als Greiferaufbau mit einem Fingerpaar (168, 170) zum Ergreifen gegenüberliegender Seiten von kastenartigen Gegenständen und zu ihrem Schieben in die Aufbewahrungsbehälter (29a, 29b) und Ziehen aus den Aufbewahrungsbehältern (29a, 29b) ausgebildet ist, wobei der Manipulatoraufbau ferner eine Einrichtung (114) zum Drehen der Greiferaufbauten (36) um die ortsfeste Welle (40) zu ihrer Positionierung neben gewünschten, aus Aufbewahrungsbehältern (29a, 29b) bestehenden Säulen (28a—g), und eine Steuereinrichtung (26, 50, 52) zum Steuern der Gleitbewegung des Manipulatoraufbaus (34) entlang der ortsfesten Stützwelle (40), der Drehung der Greiferaufbaueinheiten (36) um die ortsfeste Stützwelle (40), und des Greifvorgangs der Greiferaufbauten (36) umfasst.

2. Vorrichtung nach Anspruch 1, dadurch gekennzeichnet, daß eine aus Ladeplätzen (32a—d) bestehende Säule vorhanden ist.

3. Vorrichtung nach Anspruch 1 oder 2, dadurch gekennzeichnet, daß der Manipulatoraufbau (34) einen entlang der Stützwelle bewegbaren Lageraufbau (62, 72) und einen um den Lageraufbau (62, 72) drehbaren Nabenaufbau (38) umfasst, wobei jeder Greiferarmaufbau (36) so an dem Nabenaufbau (38) befestigt ist, daß er mit ihm dreht, und die Einrichtung zum Drehen des Manipulatoraufbaus (34) einen Motor (114) zum Antreiben des Nebenaufbaus (38) in bezug auf den Lageraufbau (62, 72) umfasst.

4. Vorrichtung nach einem der Ansprüche 1 bis 3, dadurch gekennzeichnet, daß jeder Greiferarmaufbau (36) einen Motor (164) zum Antreiben des Greifermechanismus (168, 170) entlang einer Schiene (150) umfasst, wobei eine elektrisch gesteuerte Betätigungseinrichtung (172, 174) zum Betätigen des Greifermechanismus (168, 170) vorgesehen ist.

5. Vorrichtung nach Anspruch 4, dadurch gekennzeichnet, daß eine Einrichtung (39) zur Lieferung von Steuersignalen für den Greifermechanismusmotor (164) und die Betätigungseinrichtung (172, 174) jedes Greiferarmaufbaus (36) an den Lageraufbau (62, 72) vorgesehen ist, wobei eine Kupplungseinrichtung zum Kuppeln der Steuersignale an den Nabenaufbau (38) vorgesehen ist.

6. Vorrichtung nach Anspruch 5, dadurch gekennzeichnet, daß die Kupplungseinrichtung ein erstes Kupplungsglied (70) auf dem Lageraufbau (38), ein zweites Kupplungsglied (108) auf dem Nabenaufbau (38), wobei das erste und zweite Kupplungsglied (70, 108) einander zugewandte Flächen mit darin vorgesehenen, komplementären kreisförmigen Kanälen zur Bildung eines Kupplungshohlraums (134) aufweisen, eine lichtsendende Einrichtung (132) am ersten Kupplungsglied (70) zur Umwandlung von elektrischen Signalen in Lichtsignale und zu deren Senden in den Hohlraum, und eine lichtempfangende Einrichtung (136) am zweiten Kupplungsglied (108) zum Empfangen von Lichtsignalen im Hohlraum und zu deren Umwandlung in elektrische Signale zur Lieferung an den Greifermechanismusmoteur (164) und die Betätigungseinrichtung (172, 174) jedes Greiferarmaufbaus (36) umfasst.

7. Vorrichtung nach Anspruch 6, dadurch gekennzeichnet, daß die Kupplungseinrichtung eine Sendeeinrichtung (138) am zweiten Kupplungsglied (108) und eine Lichtempfangseinrichtung (140) am ersten Kupplungsglied (70) umfasst, wodurch das Senden von Signalen vom Manipulatoraufbau erleichtert wird.

8. Vorrichtung nach Anspruch 6 oder 7, dadurch gekennzeichnet, daß das erste und zweite Kupplungsglied (70, 108) reflektierende Oberflächen aufweist, wobei in den Kanal gesendete Signale solange von der Kanaloberfläche weg reflektiert werden, bis sie von der Lichtempfangseinrichtung (136, 140) empfangen werden.

9. Vorrichtung nach einem der Ansprüche 6 bis 8, dadurch gekennzeichnet, daß eine Schleifringeinrichtung (142) zum Kuppeln von Leistungssignalen von dem Lageraufbau (62, 72) an den Nabenaufbau (38) vorgesehen ist.

10. Vorrichtung nach einem der Ansprüche 1 bis 9, dadurch gekennzeichnet, daß die ortsfeste Welle (40) einen viereckigen Querschnitt aufweist und der Lageraufbau (62, 72) eine erste Gruppe von vier Walzen (66), wobei jede Walze eine V-förmige Nut aufweist und eine unterschiedliche Ecke der Welle (40) berührt, und eine zweite, von der ersten Gruppe beabstandete Gruppe von vier Walzen (68) umfasst, wobei jede Walze (68) eine V-förmige Nut aufweist und eine unterschiedliche Ecke der Walze berührt.

11. Vorrichtung nach einem der Ansprüche 1 bis 10, dadurch gekennzeichnet, daß die Einrichtung zum Antreiben des Manipulatoraufbaus (34) entlang der Welle (40) einen mit dem Manipulatoraufbau (34) verbundenen und die Länge der Welle (40) entlang verlaufenden Riemen (84) und einen Motor (80) zum Antrieb des Riemens (84) umfasst.

12. Vorrichtung nach Anspruch 11, dadurch gekennzeichnet, daß die Welle (40) hohl ist und der Riemen (84) durch die Welle (40) geschlungen ist.

13. Vorrichtung nach Anspruch 12, dadurch gekennzeichnet, daß eine Antriebseinrichtung (90, 92) mit geschlossenem Regelkreis zum Antreiben des Motors (80) vorgesehen ist, um den Manipulatoraufbau (34) an einer gewünschten senkrechten Stelle auf der Welle (40) zu positionieren.

14. Vorrichtung nach Anspruch 13, dadurch gekennzeichnet, daß die Antriebseinrichtung mit geschlossenem Regelkreis eine erste Rückführungseinrichtung (92) zur Lieferung einer ungefähren Angabe der Position des Manipulatoraufbaus (34) umfasst.

15. Vorrichtung nach Anspruch 14, dadurch gekennzeichnet, daß die Antriebseinrichtung mit geschlossenem Regelkreis (90, 92) eine zweite Rückführungseinrichtung zur Lieferung einer genauen Angabe der Position des Manipulatoraufbaus (34) umfasst, wobei die zweite Rückführungseinrichtung an der Welle (40) Positionsmarkierungen (96) und am Manipulatoraufbau (34) einen optischen Fühler (94) zum Ablesen der Positionsmarkierungen zwecks Rückführung umfasst.

16. Vorrichtung nach einem der Ansprüche 10 bis 15, dadurch gekennzeichnet, daß die Walzen (66, 68) eine Federeinrichtung (74) zum Vorbelasten der Walzen (66, 68) in Richtung der Welle (40) umfassen.

17. Vorrichtung nach einem der Ansprüche 11 bis 16, dadurch gekennzeichnet, daß ein mit dem Manipulatoraufbau (34) gekoppeltes und in eine der Richtung des Manipulatoraufbaus (34) entgegengesetzte Richtung sich bewegendes Gegengewicht (98) vorgesehen ist.

18. Vorrichtung nach einem der Ansprüche 1 bis 17, dadurch gekennzeichnet, daß ein erster Finger (168) des Greifermechanismus (168, 170) ortsfest und ein zweiter Finger (170) ein flaches Federglied ist, wobei eine motorgetriebene Nocke (172, 174) zum Bewegen des Federgliedes (170) aus einer offenen in eine geschlossene Position vorgesehen ist.

19. Vorrichtung nach Anspruch 18, dadurch gekennzeichnet, daß ein Motor (172) mit zwei Stellungen zum Antrieb der Nocke (174) vorgesehen ist.

20. Vorrichtung nach einem der Ansprüche 4 bis 19, dadurch gekennzeichnet, daß jeder Greifermechanismus (168, 170) mehrere Walzen (154, 156, 158) mit V-förmigen Nuten zum Kuppeln des Greifermechanismus (168, 170) an die Schiene (150) umfasst.

21. Vorrichtung nach einem der Ansprüche 4 bis 20, dadurch gekennzeichnet, daß eine Einrichtung (170) mit geschlossenem Regelkreis zur Steuerung des Motors (164) vorgesehen ist.

22. Vorrichtung nach Anspruch 21, dadurch gekennzeichnet, daß sie eine Rückführungseinrichtung (182, 184) zum Fühlen der Position des Greifermechanismus (168, 170) umfasst, wobei die Antriebseinrichtung eine Einrichtung (208) zur Erzeugung eines Geschwindigkeitsverlaufs zur Steuerung der Geschwindigkeit des Motors (164) in Abhängigkeit von der Position des Greifermechanismus (168, 170) umfasst.

23. Vorrichtung nach Anspruch 22, dadurch gekennzeichnet, daß die Einrichtung (208) zur Erzeugung eines Geschwindigkeitsverlaufs eine Einrichtung zum Wählen aus verschiedenen Geschwindigkeitsverläufen in Abhängigkeit vom Betriebszustand des Greifermechanismus (168, 170) umfasst.

24. Vorrichtung nach Anspruch 22 oder 23, dadurch gekennzeichnet, daß eine Einrichtung (202) zur Überwachung der Rotations- und Höhenposition des Manipulatoraufbaus (34) vorgesehen ist, wobei die Steuereinrichtung (26, 50, 52) bewirkt, daß die Greiferaufbaueinheiten (168, 170) erst dann in Betrieb gehen, wenn der Manipulator (34) die gewünschte Position eingenommen hat.

**Revendications**

1. Appareil robotique de manutention pour emmagasiner et manier des articles en forme de boîte, comprenant une zone d'emmagasinage comprenant une pluralité de colonnes (28a—g) de récipients (29a, 29b) et un emplacement de chargement (32a—d) disposés autour d'un espace circulaire (30), chaque récipient (29a, 29b) et l'emplacement de chargement (32a—d) ayant une ouverture faisant face à l'espace circulaire (30), un arbre de support (40) vertical situé au centre de l'espace circulaire (30), un ensemble à manipulateur (34), capable de se déplacer en glissant le long de l'arbre (40), pour déplacer des articles entre les récipients (29a, 29b) et l'emplacement de chargement (32a—d) et comprenant un ensemble de maniement d'articles capable d'étendre radialement (36), et un moyen pour commander les mouvements de l'ensemble (36) de maniement d'articles entre un récipient selectionnée (29a, 29b) et l'emplacement de chargement (32a—d), l'appareil étant caractérisé en ce que l'ensemble à manipulateur (34) comprend une pluralité d'ensembles (36) à manier des articles capables de s'étendre radialement et disposés symétriquement autour dudit arbre de support (40), ledit arbre de support étant fixé, chaque ensemble (34) de maniement d'articles étant sous la forme d'un ensemble à pince ayant une paire de doigts (168, 170) pour saisir les côtés opposés des articles en forme de boîte et les pousser dans et les tirer hors des récipients (29a, 29b), l'ensemble à manipulateur comprenant en outre un moyen (114) pour faire tourner les ensembles à pince (36) autour de l'arbre fixe (40) pour les mettre en position adjacents des colonnes désirées (28a—g) de récipients (29a, 29b) et un moyen de commande (26, 50, 52) pour commander le mouvement de glissement de l'ensemble à manipulateur (34) le long de l'arbre de support (40) fixe, la rotation des ensembles à pince (36) autour de l'arbre de support (40) fixe, et l'action de saisie des ensembles à pince (36).

2. Appareil selon la revendication 1, caractérisé en ce qu'il y a une colonne d'emplacements de chargement (32a—d).

3. Appareil selon la revendication 1 ou 2, caractérisé en ce que l'ensemble à manipulateur (34) comprend un ensemble d'appui (62, 72) capable de se déplacer le long de l'arbre de support et un ensemble à moyeu (38) rotatif autour de l'ensemble d'appui (62, 72), chaque ensemble à bras à pince (36) étant attaché à l'ensemble à moyeu (38) pour tourner avec celui-ci et en même temps le moyen pour faire tourner l'ensemble à manipulateur (34) comprenant un moteur (114) pour entraîner l'ensemble à moyeu (38) par rapport à l'ensemble d'appui (62, 72).

4. Appareil selon l'une quelconque des revendications 1 à 3, caractérisé en ce que chaque ensemble à bras à pince (36) comprend un moteur (164) pour entraîner le mécanisme à pince (168, 170) le long d'un rail (150), un moyen (172, 174) d'actionnement commandé électriquement étant prévu pour actionner le mécanisme à pince (168, 170).

5. Appareil selon la revendication 4, caractérisé en ce qu'un moyen (39) est prévu pour fournir des signaux de commande pour le moteur du mécanisme à pince (164) et le moyen d'actionnement (172, 174) de chaque ensemble à bras à pince (36) vers l'ensemble d'appui (62, 72), un moyen de couplage étant prévu pour coupler les signaux de commande à l'ensemble à moyeu (38).

6. Appareil selon la revendication 5, caractérisé en ce que le moyen de couplage comprend un premier élément de couplage (70) sur l'ensemble d'appui (38), un second élément de couplage (108) sur l'ensemble à moyeu (38), le premier et second éléments de couplage (70, 108) ayant des surfaces opposées porteuses de canaux circulaires complémentaires pour former une cavité de couplage (134), un moyen (132) à transmetteur de la lumière sur le premier élément de couplage (70) pour convertir des signaux électriques en signaux lumineux et les transmettre dans la cavité, et un moyen (136) récepteur de la lumière sur le second élément de couplage (108) pour recevoir les signaux lumineux dans la cavité et les convertir en siganux électriques pour être fournis au moteur du mécanisme à pince (164) et le moyen d'actionnement (172, 174) de chaque ensemble à bras à pince (36).

7. Appareil selon la revendication 6, caractérisé en ce que le moyen de couplage comprend un moyen à transmetteur (138) sur le second élément de couplage (108) et un moyen (140) récepteur de la lumière sur le premier élément de couplage (70), facilitant par là la transmission de signaux depuis l'ensemble à manipulateur.

8. Appareil selon la revendication 6 ou 7, caractérisé en ce que le premier et le second élément de couplage (70, 108) ont des surfaces réflectrices grâce auxquelles les signaux transmis dans le canal seront réfléchis de la surface du canal jusqu'à ce qu'ils soient reçus par le moyen (136, 140) récepteur de lumière.

9. Appareil selon l'une quelconque des revendications 6 à 8, caractérisé en ce qu'un moyen à bague glissante (142) pour couplage des signaux d'énergie à partir de l'ensemble d'appui (62, 72) à l'ensemble à moyeu (38) est prévu.

10. Appareil selon l'une quelconque des revendications 1 à 9, caractérisé en ce que l'arbre fixe (40) a une section carrée et l'ensemble d'appui (62, 72) comprend un premier groupe de quatre cylindres (66), chaque cylindre ayant une rainure en V et entrant en contact avec un coin différent de l'arbre (40), et un second groupe de quatre cylindres (68) espacé du premier groupe, chaque cylindre (68) ayant une rainure en V et entrant en contact avec un coin différent de l'arbre.

11. Appareil selon l'une quelconque des revendications 1 à 10, caractérisé en ce que le moyen pour entraîner l'ensemble à manipulateur (34) le long de l'arbre (40) comprend une courroie (84) reliée à l'ensemble à manipulateur (34) et s'étendant tout le long de l'arbre (40) et un moteur (80) pour entraîner la courroie (84).

12. Appareil selon la revendication 11, caractérisé en ce que l'arbre (40) est creux et la courroie (84) est bouclée à travers l'arbre (40).

13. Appareil selon la revendication 12, caractérisé en ce qu'un moyen d'entraînement en boucle fermée (90, 92) est prévu pour entraîner le moteur (80) pour placer l'ensemble à manipulateur (34) à une position verticale désirée sur l'arbre (40).

14. Appareil selon la revendication 13, caractérisé en ce que le moyen d'entraînement en boucle fermée comprend un premier moyen de signal en retour (92) pour fournir une indication grossière de la position de l'ensemble à manipulateur (34).

15. Appareil selon la revendication 14, caractérisé en ce que le moyen d'entraînement en boucle fermée (90, 92) comprend un second moyen de signal en retour pour fournir une indication précise de la position de l'ensemble à manipulateur (34), ledit second moyen de signal en retour comprenant des marquages de position (96) sur l'arbre (40) et un senseur optique (94) sur l'ensemble à manipulateur (34) pour lire les marquages de position afin de fournir le signal en retour.

16. Appareil selon l'une quelconque des revendications 10 à 15, caractérisé en ce que les cylindres (66, 68) comprennent un moyen à ressort (74) pour précharger les cylindres (66, 68) vers l'arbre (40).

17. Appareil selon l'une quelconque des revendications 11 à 16, caractérisé en ce que un contrepoids (98) est prévu accouplé à l'ensemble à manipulateur (34) pour se déplacer en direction opposée à celle de l'ensemble à manipulateur (34).

18. Appareil selon l'une quelconque des revendications 1 à 17, caracatérisé en ce qu'un premier doigt (168) du mécanisme à pince (168, 170) est fixe et un second doigt (170) est un élément à ressort plat, une came (172, 174) entraînée par un moteur étant prévue pour déplacer l'élément à ressort (170) d'une position ouverte à une position fermée.

19. Appareil selon la revendication 18, caractérisé en ce qu'un moteur à deux positions (172) est prévu pour entraîner la came (174).

20. Appareil selon l'une quelconque des revendications 4 à 19, caractérisé en ce que chaque mécanisme à pince (168, 170) comprend une pluralité de cylindres à rainure en V (154, 156, 158) pour accouplement du mécanisme à pince (168, 170) au rail (150).

21. Appareil selon l'une quelconque des revendications 4 à 20, caractérisé en ce que le moyen en boucle fermée (170) est prévu pour commander le moteur (164).

22. Appareil selon la revendication 21, caractérisé en ce qu'il comprend un moyen de signal en retour (182, 184) pour déterminer la position du mécanisme à pince (168, 170), le moyen d'entraînement comprenant un moyen (208) à générateur de profil de vitesse pour commander la vitesse du moteur (164) en fonction de la position du mécanisme à pince (168, 170).

23. Appareil selon la revendication 22, caractérisé en ce que le moyen (208) à générateur de profil de vitesse comprend un moyen pour sélectionner parmi les différents profils de vitesse en fonction du status operationnel du mécanisme à pince (168, 170).

24. Appareil selon la revendication 22 ou 23, caractérisé en ce qu'un moyen (202) est prévu pour contrôler la position de rotation et le niveau vertical de l'ensemble à manipulateur (34), dans lequel le moyen de commande (26, 50, 52) fait que les ensembles à pince (168, 170) n'opèrent qu'après que le manipulateur (34) ait atteint la position désirée.

*Fig. 1*

*Fig. 3*

*Fig. 2*

Fig. 4

BAR CODE SCANNER — 42

CASSETTE MANIPULATOR — 34

LOADING SENSOR — 46

MANIPULATOR CONTROLLER — 50

MAIN CONTROLLER — 26a

PRINTER — 60

TERMINAL — 26b

VIDEO-CASSETTE TRANSPORTS VTR'S — 32

SIGNAL PROCESSING — 56

A-V INPUT

A-V OUTPUT

MONITORS — 20; 22; 24

VTR INTERFACE — 54

SEQUENCING

SEQUENCE CONTROLLER — 52

TERMINAL — 58

EP 0 222 762 B1

Fig. 5

EP 0 222 762 B1

Fig. 6

Fig. 8

4

Fig. 7

Fig. 9

Fig. 10

FIG. 11

Fig. 12

Fig. 13

## Fig. 14